# EUROPEAN PATENT SPECIFICATION

(11) **EP 1 521 381 B1**
(45) Date of publication and mention of the grant of the patent: **24.05.2006**
(21) Application number: 02738190.4
(22) Date of filing: 12.06.2002
(51) Int. Cl.: H04B 3/54, H04B 3/56, H01R 13/646, H01R 13/652, H01R 13/68, H01R 13/719

(54) **MEDIUM-VOLTAGE ISOLATED CAPACITIVE COUPLING SYSTEM**
MITTELSPANNUNGSISOLIERTES KAPAZITIVES KOPPLUNGSSYSTEM
SYSTEME DE COUPLAGE CAPACITIF ISOLE A MOYENNE TENSION

(43) Date of publication of application: 06.04.2005
(73) Proprietor: Grupo Ormazabal, S.A., 48170 Zamudio (Vizcaya) (ES)
(72) Inventor: ORMAZABAL OCERIN, Javier, E-48170 Zamudio (ES)
(74) Representative: Carpintero Lopez, Francisco
(86) International application number: PCT/ES2002/000286
(87) International publication number: WO 2003/107560

(56) References cited:
- WO-A1-01/43238
- US-A- 4 973 940
- PATENT ABSTRACTS OF JAPAN & JP 10 065 583 A (MATSUSHITA ELECTRIC WORKS LTS) 06 March 1998

## Description

### PURPOSE OF THE INVENTION

The present invention refers to a coupling system that allows the transmission and reception of analogue and/or digital signals through an electrical power distribution system, of the type that use a medium-voltage capacitor to connect with the high frequency signals at medium voltage and to introduce them into a low voltage tuning circuit.

In particular, the invention system refers to an isolated and shielded coupling that allows a secure connection to a cable or to medium voltage equipment, with a high degree of protection of isolation as well as screening, also providing complete protection against environmental conditions.

In this way the coupling system proposed allows transmitting/receiving signals directly from the medium voltage network, maintaining safety levels, reliability and isolation of the unit, eliminating the risk of areas exposed to the air, as well as of maintenance works.

### BACKGROUND OF THE INVENTION

The transmission and monitoring of signals through the electrical network is a widely extended practice among electrical companies but is limited to the communication of signals relating to the operational condition of the high voltage network. The limited speed of transmission of signals through the high voltage network has prevented a more widespread use of this type of data communication system for other purposes, different from remote control.

Nevertheless, in latter years the distribution network has begun to be used, at both low and medium voltage, as an acceptable medium for the transmission of signals, voice, data and images, its use extending to the public in general and not restricted to the actual needs of the electrical company, as has been habitual up until now.

For carrying out communications through the electrical distribution network fundamentally two possibilities exist:
- On reaching the medium to low voltage transformation centre the low voltage network signals are stored in a communications cabinet, from which they are transmitted through the usual telephony media.
- On reaching the medium to low voltage transformation centre the low voltage network signals are stored and they pass on to the medium voltage network and vice versa. In this way, the signals of several transformation centres are concentrated in another distribution transformation centre, or in the actual substation, maximizing in this way the use of the electrical network for transmission of the signals and minimising the number of communication cabinets and telephone lines existing in the transformer centres.

The coupling system subject of the invention is based on this second possibility.

Likewise, for the coupling of the low-voltage electrical network signals to the medium-voltage network and vice versa, various conceptual solutions exist, such as for example:
- Transmission of signals through the screen of the medium-voltage cable. This system is based on the use of a number of transmitters/receivers at the ends of the cable screening that, in turn, are connected to one of the ends of the corresponding coil. Each data transmitter has an oscillator for a carrier frequency, very similar to the resonance frequency of the oscillating circuit, formed by the coils placed at the ends of the cable screen and the capacitance of said screen; each transmitter incorporating a modulator and each receiver a demodulator to respectively modulate and demodulate the carrier frequency with the data transmitted.
- Capacitive coupling of the signals. Capacitive coupling of signals uses the cable of the actual conductor as a medium for transmission of signals, instead of using its screen. This system has the advantage of being usable in cables without a screen, as for example in overhead lines, it being unnecessary to obligatorily place this equipment in air underground conversions in which the cable screen is eliminated, allowing, in this way, the coverage of greater distances with a minimum amount of equipment.
The system is similar to that described in the previous case, except in that the signal coupling is carried out directly at medium voltage instead of at the earthed screen of the cable. Coupling is carried out through a medium-voltage capacitor whose capacitance is used to form a resonating circuit in the range of frequencies of the carrier waves, instead of using the capacitance of the cable screen.

Various solutions exist in the market to carry out this capacitive coupling at medium-voltage generally based on the use of isolators in which the medium-voltage capacitor is placed but these solutions are limited to their use with medium-voltage cables whose terminal is accessible, that is, that the communications system is only usable at those points in which the medium-voltage cable has its core exposed.

A system of this type is described for example in European patent n° 1.079.538.

These systems have the disadvantage that they expose live elements that are subject to environmental conditions such as conducting dust, high humidity, saltiness, flooding, etc. that can bring about a degradation of the insulation, and as a consequence, a fault in the electrical system. Communications can also be degenerated by capacitive coupling of surface discharges or from the corona effect that interfere with the transmitted signals. In addition, un-isolated live and accessible parts constitute a high risk for personnel during maintenance operations.

To avoid problems associated with degradation of the insulation, it becomes necessary to carry out periodic maintenance works on the exposed parts.

Patent US-4.973.940 relates to a capacitive coupling at medium-voltage that allows transmission and/or reception of analog/digital signals through an electrical power distribution system.

The international PCT application WO-01/43238 discloses a coupling device for connecting a data terminal to a low-voltage power supply network.

### DESCRIPTION OF THE INVENTION

The system that is subject of the invention allows medium-voltage capacitive coupling to be carried out in conditions of isolation and electrical safety constituting furthermore a system insensitive to environmental conditions, tolerating dust, moisture and even flooding.

In particular, the system allows its coupling to a cable or medium voltage equipment, maintaining the isolation and screening characteristics of the unit.

For this, the capacitive coupling system is formed by a watertight encapsulation in whose interior the medium-voltage capacitor is placed, as well as a metallic screen that facilitates the distribution of the electric field within it.

This watertight encapsulation is directly connected to the isolated connector linked to the medium-voltage equipment bushing or to a medium-voltage cable linked to said connector, in such a way that on using screened medium-voltage connectors and cables and with the capacitor being within a watertight encapsulation, the assembly becomes insensitive to the environmental conditions of the installation.

The watertight encapsulation can be formed by a solid encasing of polymeric material in whose interior the capacitor is embedded, or it can be formed by a hollow encasing, whose interior is filled with a dielectric fluid.

The watertight encapsulation incorporates an earthing connection and a signal output connector that provides the signals, now at a voltage lower than that of the medium-voltage cable, preferably at low voltage, to the tuning circuit.

The watertight encapsulation can also serve as an insulating terminal that seals the coupling connector to the medium-voltage equipment, or even form a connection terminal that allows another cable, automatic valve, etc., to be connected through it.

To achieve a greater degree of integration, the tuning circuit, and even the protection fuse, can be included within the watertight encapsulation.

The system thus allows a connection to be made to medium-voltage equipment, with a high degree of protection, both of isolation and screening, simultaneously providing capacitive coupling for the transmission/reception of analogue and/or digital signals, remote control, monitoring and measurement of partial discharges, loss angles, voltage, circuit supply, etc.

As we have said, the system being isolated from the environment, the risks of zones exposed to the air are eliminated and maintenance problems are avoided.

### DESCRIPTION OF THE DRAWINGS

Figure 1 relates to a coupling system in accordance with the object of the invention formed by an solid polymeric encasing as connection terminal to a medium-voltage connector linked to the medium-voltage equipment bushing.
Figure 2 relates to a coupling similar to that of Figure 1 but, in which the tuning circuit is included within the same encapsulation as the capacitor and the protection fuse is also encapsulated but in an independent piece, inserted between the coupling system and the medium-voltage connector.
Figure 3 relates to a coupling similar to that of the previous figures, but in which the encapsulation is established as an electrical connection terminal to allow connections of other elements through it.
Figure 4 relates to a coupling in which the encapsulation is formed by a hollow shielded and earthed encasing, filled with dielectric fluid, connected to a medium-voltage cable, that in turn is connected to the medium-voltage connector linked into the medium-voltage equipment bushing.
Figure 5 relates to a coupling like that of the previous figure in which the fuse and tuning circuit have been placed within the encasing.

### PREFERABLE EMBODIMENT OF THE INVENTION

The capacitive coupling system subject of the invention is intended for coupling with a medium-voltage cable (4), linked to medium-voltage equipment (1) by means of the corresponding connector (3).

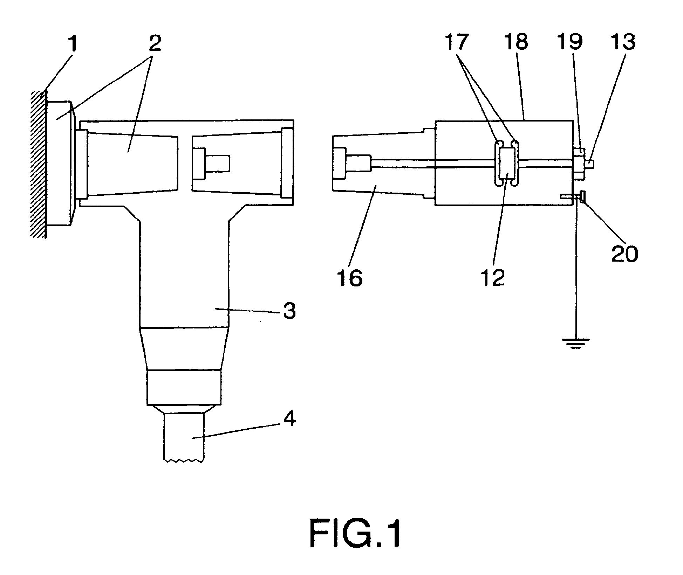

As is seen in Figure 1, the capacitor (12) is embedded in a watertight encapsulation (16) which is formed by a solid polymeric encasing, that has a truncated-conical end that acts as an insulating terminal that is connected to the medium-voltage connector (3). As it is also seen in this figure, within the watertight encapsulation (16) a screen (17), that surrounds the capacitor and facilitates the distribution of the electric field within the watertight encapsulation, is placed.

Placed at the rear of the watertight encapsulation (16) are the earthing (20) and the signal connector (13) that allows the entry/output of the signal that supplies the tuning circuit (15) for its conversion and processing, now at a voltage lower than that of the medium-voltage cable. At this rear of the watertight encapsulation (16) a nut (19), that allows the terminal to be tightened, is also placed. The rear part (18) of the watertight encapsulation (16), is earthed in such a way that on fitting the truncated-conical insulating part in the medium-voltage connector (3) only the rear part of the encapsulation is accessible, and furthermore, earthed.

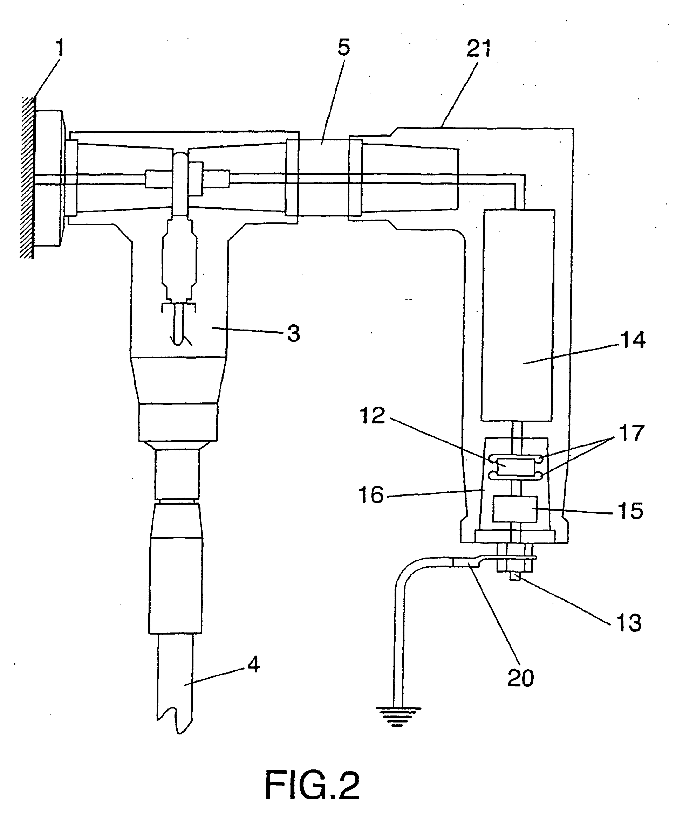

As is observed in Figure 2, within the watertight encapsulation (16) it is also possible to place the tuning circuit (15) as well as the protection fuse (14). In this figure, the protection fuse has been placed in a screened encasing (21) independent from the watertight encapsulation (16) but, obviously, the protection fuse (14) could also be placed within same watertight encapsulation (16) in which the capacitor is embedded.

If the fuse is not used, or it is embedded along with the capacitor, the watertight encapsulation (16) would connect directly to the connector (3) of the cable (4) whereas in case of incorporating a protection fuse in an independent encasing (21), the watertight encapsulation (16) would be joined with the encasing (21) that incorporates the fuse and this in turn to the medium-voltage connector (3), through a suitable connection terminal (5).

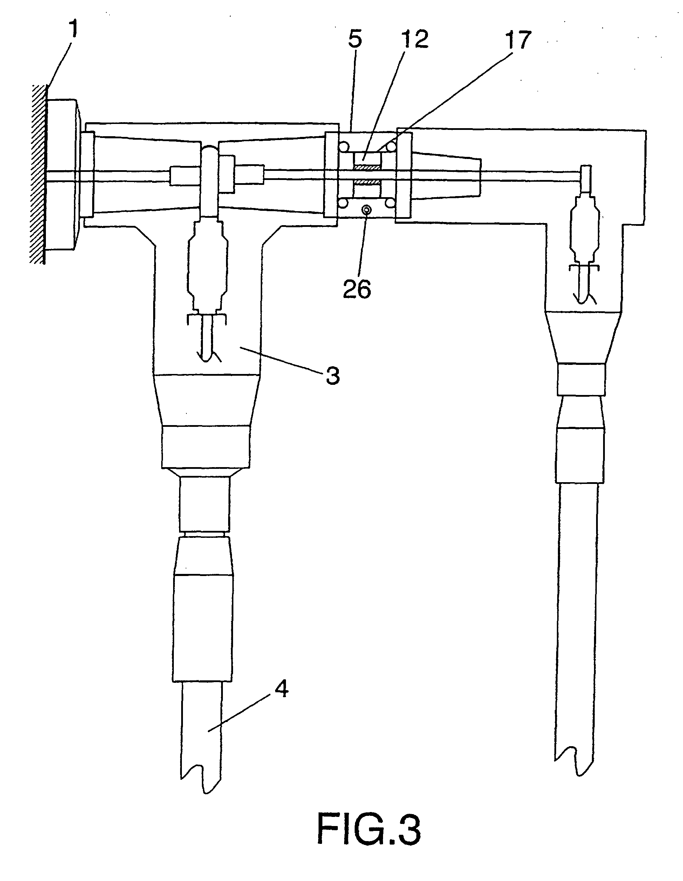

In Figure 3 a constructive variant has been shown in which the polymeric watertight encapsulation (16) finishes off in its rear part in a connection terminal that allows electrical connections to be carried out through the watertight encapsulation (16), the output of the signals being carried out in this case through the side surface of the encasing body. In this figure a medium-voltage cable (4) connected to the encasing has been shown, but it could be used for connecting any other element, such as, for example, an automatic valve.

When said terminal is not used as an element of interconnection a stopper that seals off the terminal and protects it from dirt, foreign items, etc., is used.

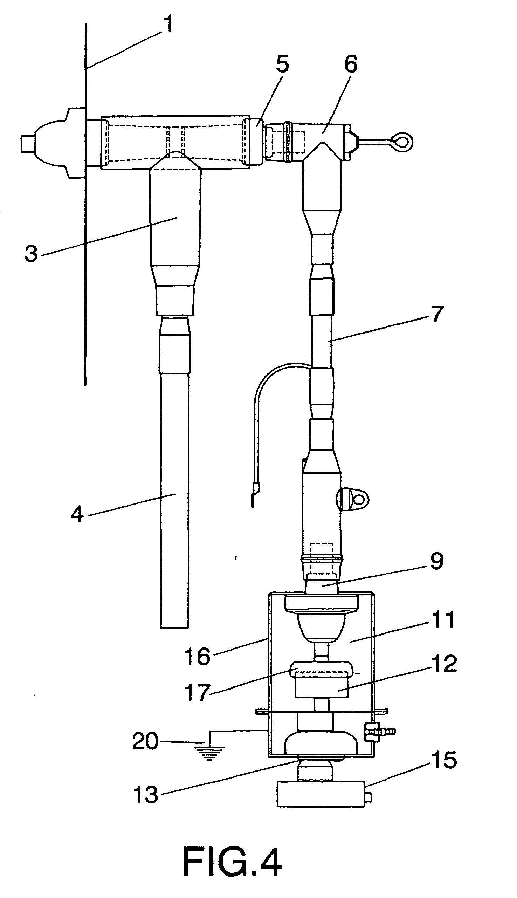

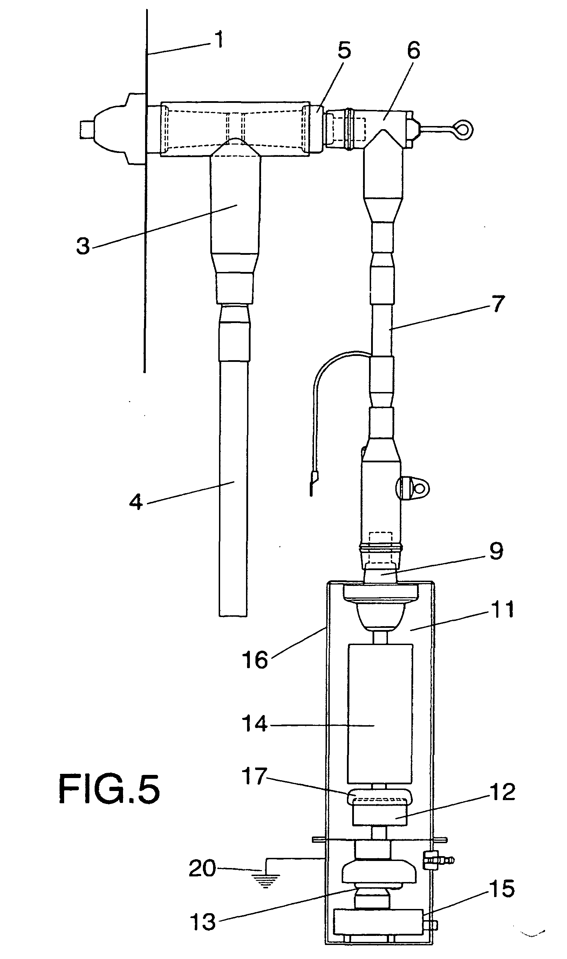

In Figures 4 and 5 a coupling system in accordance with the object of the invention has been shown in which the watertight encapsulation (16) is formed by a hollow metallic encasing whose interior is filled with dielectric fluid (11), the connection of the watertight encapsulation with the medium-voltage cable (7) being carried out through a signal input bushing (9) at medium-voltage, whereas the signal output, at low voltage, is carried out through the connector (13) connected to the tuning circuit (15) for appropriate conversion and processing.

As is seen in Figures 4 and 5, the connection of the medium-voltage equipment (1) with the medium-voltage cable (4) has been carried out using a T connector (3) in whose free end an angle connector (6), that incorporates the medium-voltage cable, is attached; and that connects to the watertight encapsulation through the connector (8) and bushing (9).

In Figure 5 the protection fuse (14) and the tuning circuit (15) have been introduced within the watertight encapsulation (16).

## Claims

1. Medium-voltage isolated capacitive coupling system for the transmission and reception of analogue and/or digital signals through an electrical power distribution system, using a medium-voltage coupling capacitor (12) that is placed between the medium-voltage cables (4), and a tuning circuit to which the signal arrives at a voltage lower than that of the medium-voltage cable (4); **characterised in that** it is formed by a watertight encapsulation (16) in whose interior the medium-voltage capacitor (12) and a screen (17) that serves to distribute the electric field, are placed; said watertight encapsulation (16) being connected to a said medium-voltage cable (4) or to medium-voltage equipment (1), using medium-voltage connectors (3), (5), (6) and/or shielded second medium-voltage cables (7) that are connected through an equipment bushing (2), in this way maintaining total protection against environmental conditions, as well as the isolation and safety characteristics of the installation.

2. Medium-voltage isolated capacitive coupling system, according to claim 1, **characterised in that** a protection fuse (14) is placed within the watertight encapsulation (16).

3. Medium-voltage isolated capacitive coupling system, according to claim 1, **characterised in that** a tuning circuit (15) is placed within the watertight encapsulation (16).

4. Medium-voltage isolated capacitive coupling system, according to claim 1, **characterised in that** the watertight encapsulation (16) is formed by a solid polymeric encasing (16), shielded and earthed, in whose interior the medium-voltage capacitor (12) and the screen (17) are embedded; having in its rear part (18) an earthing connection (20), shielded and earthed, and a metallic signal connector (13) for the output of the signal that supplies the tunning circuit (15); having a truncated-conical connection terminal at its other end through which it electrically connects to the medium-voltage connector (3) connected to the bushing (2) of the medium-voltage equipment (1); in this way the watertight encapsulation (16) also serving as sealing stopper for the medium-voltage connector (3).

5. Medium-voltage isolated capacitive coupling system, according to claim 4, **characterised in that** the a tuning circuit (15) is placed within the watertight encapsulation (16).

6. Medium-voltage isolated capacitance coupling system, according to claim 4, **characterised in that** the protection fuse (14) is housed within a screened encasing (21), said screened encasing (21) being joined to the watertight encasing (16) and to the medium-voltage connector (3) through a second medium-voltage connector (5), wherein said watertight encasing (16) is independent of said screened encasing (21).

7. Medium-voltage isolated capacitive coupling system, according to claim 4, **characterised in that** the watertight encapsulation (16) has in its rear part a nut (19) that allows the medium-voltage connector (5) to be tightened.

8. Medium-voltage isolated capacitive coupling system, according to claim 1, **characterised in that** the watertight encapsulation (16) finishes off, at both ends, in a connection terminal that allows electrical connections to be carried out through the watertight encapsulation (16); the signal output being carried out through a connector (26) provided in the side surface of the encasing body.

9. Medium-voltage isolated capacitive coupling system, according to claim 1, **characterised in that** the watertight encapsulation (16) is formed by a hollow metallic encasing (10), shielded and earthed, and filled with a dielectric fluid (11); said watertight encapsulation (16) having an input bushing (9) for connection to the second medium-voltage cable (7), that is connected to the bushing (2) of the medium-voltage equipment (1) through the connection terminal (5) and the medium-voltage connector (3).

10. Medium-voltage isolated capacitive coupling system, according to claim 7, **characterised in that** the a protection fuse (14) is placed within the watertight encapsulation (16).

11. Medium-voltage isolated capacitive coupling system, according to claim 7, **characterised in that** the a tuning circuit (15) is placed within the watertight encapsulation (16).

## Patentansprüche

1. Isoliertes Mitteispannungssystem mit kapazitiver Kopplung zum Senden und Empfangen analoger und/oder digitaler Signale über ein Elektroenergie-Verleilungssystem unter Verwendung eines Mittelspannungs-Kopplungskondensators (12), der zwischen dem Mittelspannungskabel (4) und einer Abstimmschaltung angeordnet ist, an der das Signal mit einer Spannung ankommt, die niedriger ist als die des Mittelspannungskabels (4), **dadurch gekennzeichnet, dass** es durch eine wasserdichte Umhüllung (16) gebildet wird, in derem Inneren der Mittelspannungskondensator (12) und eine Abschirmung (17), die dazu dient, das elektrische Feld zu verteilen, angeordnet sind, wobei die wasserdichte Umhüllung (16) mit dem Mittelspannungskabel (4) oder einer Mittelspannungseinrichtung unter Verwendung von Mittelspannungsverbindern (3, 5, 6) und/oder abgeschirmten zweiten Mittelspannungskabeln (7) verbunden ist, die über eine Buchse der Einrichtung (2) verbunden sind, so dass vollständiger Schutz gegenüber Umweltbedingungen sowie die lsolations- und Sicherheitseigenschaften der Einrichtung aufrechterhalten werden.

2. Isoliertes Mittelspannungssystem mit kapazitiver Kopplung nach Anspruch 1, **dadurch gekennzeichnet, dass** eine Schutzsicherung (14) in der wasserdichten Umhüllung (16) angeordnet ist.

3. Isoliertes Mittelspannungssystem mit kapazitiver Kopplung nach Anspruch 1, **dadurch gekennzeichnet, dass** die Abstimmschaltung (15) in der wasserdichten Umhüllung (16) angeordnet ist.

4. Isoliertes Mittelspannungssystem mit kapazitiver Kopplung nach Anspruch 1, **dadurch gekennzeichnet, dass** die wasserdichte Umhüllung (16) durch eine massive Polymer-Ummantelung gebildet wird, die abgeschirmt und geerdet ist und in derem Inneren der Mittelspannungskondensator (12) sowie die Abschirmung (17) eingebettet sind, wobei sie in ihrem hinteren Teil (18) eine Erdungsverbindung (20), die abgeschirmt und geerdet ist, und einen Signalverbinder (13) aus Metall zum Ausgeben des Signals aufweist, das die Abstimmschaltung (15) speist, an ihrem anderen Ende einen kegelstumpfförmigen Verbindungsanschluss aufweist, über den sie elektrisch mit dem Mittelspannungsverbinder (3) verbunden ist, der mit der Buchse (2) der Mittelspannungseinrichtung (1) verbunden ist, so dass die wasserdichte Umhüllung (16) auch als Verschlussstopfen für den Mittelspannungsverbinder (3) dient.

5. Isoliertes Mittelspannungssystem mit kapazitiver Kopplung nach Anspruch 4, **dadurch gekennzeichnet, dass** die Abstimmschaltung (15) in der wasserdichten Umhüllung (16) angeordnet ist.

6. Isoliertes Mittelspannungssystem mit kapazitiver Kopplung nach Anspruch 4, **dadurch gekennzeichnet, dass** die Schutzsicherung (14) in einer abgeschirmten Ummantelung (21) aufgenommen ist, wobei die abgeschirmte Ummantelung (21) mit der wasserdichten Umhüllung (16) und mit dem Mittelspannungsverbinder (3) über einen zweiten Mittelspannungsverbinder (5) verbunden ist, und die wasserdichte Umhüllung (16) unabhängig von der abgeschirmten Ummantelung (21) ist.

7. Isoliertes Mittelspannungssystem mit kapazitiver Kopplung nach Anspruch 4, **dadurch gekennzeichnet, dass** die wasserdichte Umhüllung (16) in ihrem hinteren Teil eine Mutter (19) hat, die es ermöglicht, den Mittelspannungsverbinder (5) anzuziehen.

8. Isoliertes Mittelspannungssystem mit kapazitiver Kopplung nach Anspruch 1, **dadurch gekennzeichnet, dass** die wasserdichte Umhüllung (16) an beiden Enden in einem Verbindungsanschluss endet, der es ermöglicht, elektrische Verbindungen durch die wasserdichte Umhüllung (16) hindurch auszuführen, wobei der Signalausgang über einen Verbinder (26) ausgeführt wird, der in der Seitenfläche des Ummantelungskörpers vorhanden ist.

9. Isoliertes Mittelspannungssystem mit kapazitiver Kopplung nach Anspruch 1, **dadurch gekennzeichnet, dass** die wasserdichte Umhüllung (16) durch eine hohle Ummantelung aus Metall gebildet wird, die abgeschirmt und geerdet und mit einem dielektrischen Fluid (11) gefüllt ist, wobei die wasserdichte Umhüllung (16) eine Eingangsbuchse (9) zur Verbindung mit dem zweiten Mittelspannungskabel (7) aufweist, das mit der Buchse (2) der Mittelspannungseinrichtung (1) über den Verbindungsanschluss (5) und den Mittelspannungsverbinder (3) verbunden ist.

10. Isoliertes Mittelspannungssystem mit kapazitiver Kopplung nach Anspruch 7, **dadurch gekennzeichnet, dass** die Schutzsicherung (14) in der wasserdichten Umhüllung (16) angeordnet ist.

11. Isoliertes Mittelspannungssystem mit kapazitiver Kopplung nach Anspruch 7, **dadurch gekennzeichnet, dass** die Abstimmschaltung (15) in der wasserdichten Umhüllung (16) angeordnet ist.

## Revendications

1. Système de couplage capacitif isolé à moyenne tension pour la transmission et la réception de signaux analogiques et/ou numériques par l'intermédiaire d'un système de distribution de puissance électrique, utilisant un condensateur de couplage à moyenne tension (12) placé entre les câbles de moyenne tension (4), et un circuit de réglage qui reçoit le signal à une tension inférieure à celle du câble à moyenne tension (4),
**caractérisé en ce qu'**
il est formé par un boîtier étanche à l'eau (16) qui loge le condensateur à moyenne tension (12) et un écran (17) servant à distribuer le champ électrique, et le boîtier étanche à l'eau (16) est relié au câble à moyenne tension (4) ou à un équipement à moyenne tension (1) utilisant des connecteurs à moyenne tension (3), (5), (6) et/ou des deuxièmes câbles à moyenne tension protégés (7) qui sont reliés par l'intermédiaire d'une douille d'équipement (2), maintenant de cette façon une protection totale contre les conditions environnementales, ainsi que les caractéristiques d'isolation et de sécurité de l'installation.

2. Système de couplage capacitif isolé à moyenne tension selon la revendication 1,
**caractérisé en ce qu'**
un fusible de protection (14) est placé dans le boîtier étanche à l'eau (16).

3. Système de couplage capacitif isolé à moyenne tension selon la revendication 1,
**caractérisé en ce qu'**
un circuit de réglage (15) est placé dans le boîtier étanche à l'eau (16).

4. Système de couplage capacitif isolé à moyenne tension selon la revendication 1,
**caractérisé en ce que**
le boîtier étanche à l'eau (16) est formé par un revêtement polymère solide, protégé et mis à la terre, à l'intérieur duquel sont incorporés le condensateur à moyenne tension (12) et l'écran (17), il a sur sa partie arrière (18) une liaison de terre (20) protégée et mise à la terre, et un connecteur de signal métallique (13) pour émettre le signal qui alimente le circuit de réglage (15), une borne de liaison tronconique à son autre extrémité relie électriquement au connecteur à moyenne tension (3) relié à la douille (2) de l'équipement à moyenne tension (1), le boîtier étanche à l'eau (16) servant également de cette manière de bouchon d'étanchéité pour le connecteur à moyenne tension (3).

5. Système de couplage capacitif isolé à moyenne tension selon la revendication 4,
**caractérisé en ce que**
le circuit de réglage (15) est placé dans le boîtier étanche à l'eau (16).

6. Système de couplage capacitif isolé à moyenne tension selon la revendication 4,
**caractérisé en ce que**
le fusible de protection (14) est logé dans un revêtement protégé (21), ce dernier étant lié au boîtier étanche à l'eau (16) et au connecteur à moyenne tension (3) par un deuxième connecteur à moyenne tension (5), le boîtier étanche à l'eau (16) étant indépendant du boîtier protégé (21).

7. Système de couplage capacitif isolé à moyenne tension selon la revendication 4,
**caractérisé en ce que**
le boîtier étanche à l'eau (16) comporte, sur sa partie arrière, un écrou (19) qui permet l'étanchéité du connecteur à moyenne tension (5).

8. Système de couplage capacitif isolé à moyenne tension selon la revendication 1,
**caractérisé en ce que**
le boîtier étanche à l'eau (16) se termine, au niveau de ses deux extrémités, par une borne de liaison qui permet à des liaisons électriques d'être effectuées par l'intermédiaire du boîtier étanche à l'eau (16), la sortie de signal étant effectuée par l'intermédiaire d'un connecteur (26) disposé dans la surface latérale du corps de revêtement.

9. Système de couplage capacitif isolé à moyenne tension selon la revendication 1,
**caractérisé en ce que**
le boîtier étanche à l'eau (16) est formé par un revêtement métallique creux, protégé et mis à la terre, et rempli d'un fluide diélectrique (11), le boîtier étanche à l'eau (16) ayant une douille d'entrée (9) pour une liaison avec le deuxième câble à moyenne tension (7) relié à la douille (2) de l'équipement à moyenne tension (1) par l'intermédiaire de la borne de liaison (5) et du connecteur à moyenne tension (3).

10. Système de couplage capacitif isolé à moyenne tension selon la revendication 7,
**caractérisé en ce qu'**
un fusible de protection (14) est placé dans le boîtier étanche à l'eau (16).

11. Système de couplage capacitif isolé à moyenne tension selon la revendication 7,
**caractérisé en ce que**
le circuit de réglage (15) est placé dans le boîtier étanche à l'eau (16).
